# EUROPEAN PATENT APPLICATION

(11) **EP 0 841 660 A2**
(43) Date of publication of application: **13.05.1998**
(21) Application number: 97119219.0
(22) Date of filing: 04.11.1997
(51) Int. Cl.: G11B 17/22, G11B 17/04

(54) **Apparatus for conveying a loading/unloading device for data storage media**

(30) Priority: 07.11.1996 DE 19645917
(71) Applicant: EASTMAN KODAK COMPANY, Rochester, New York 14650 (US)
(72) Inventor: Hirsch, Alexander, 70323 Stuttgart (DE)
(74) Representative: Lewandowsky, Klaus, Dipl.-Ing.

(57) **Abstract**

The invention relates to an apparatus (1) for conveying in a vertical direction a loading and unloading mechanism (2) for data storage media (5), one or more data storage media being held one above the other in one or more retaining fixtures (3). In order to create a device which, firstly, prevents the conveying mechanism and/or the loading/unloading mechanism from jamming in the event of a fault and damaging the data storage medium being inserted/removed and which, secondly, is straightforward and compact in design, a mechanism (4) for locking the conveying mechanism (1) is provided which is engaged when the data storage medium (5) is moved out of the retaining fixture (3) to any degree, thereby preventing the loading and unloading mechanism (2) together with the conveying mechanism from dropping downwards in the event of a power failure.

## Description

The present invention relates to an apparatus for conveying in a vertical direction a loading/unloading device for data storage media in which one or more data storage medium is held in one or more retaining fixtures.

There are known conveying mechanisms of the type referred to above that are driven by belt or spindle drive units and that are components of recording/playback or archiving devices for data storage media.

The disadvantages of those conveying mechanisms are that, firstly, they are too complex in construction, as exemplified by the design described in EP-A-0 506 458 which has two screw spindles driven by a self-locking transmission and a controlled drive motor, or the design described in US-A-5,247,408 which has a belt-drive system with a counterbalance weight for the loading/unloading devices.

Secondly, the preferable and simpler construction with a single screw spindle driven by a non-self-locking transmission and a stepping motor, such as that described in EP-0 708 442, fails to ensure that the data storage medium loading/unloading mechanism remains in the previously selected position in the event of a fault such as a power failure, i.e. the loading/unloading mechanism may drop downwards and jam if a data storage medium has been partially or fully withdrawn from the retaining fixture, such as in the case of a data storage medium withdrawn from a magazine or recording/playback disc drive, and/or may cause damage to the data storage medium.

The object of the present invention is thus to create an apparatus of the type referred to in the opening paragraph which, firstly, prevents the conveying mechanism and/or the loading/unloading mechanism jamming and consequent damage to the data storage medium being loaded/unloaded in the event of a malfunction, and which, secondly, is straightforward and compact in construction and ensures reliable operation within an automated environment.

The present invention achieves that object by means of an apparatus in accordance with Claim 1 such that a means of locking the conveying mechanism is provided which is engaged whenever the data storage medium is moved out of the retaining fixture to any extent.

Advantageously, the means of locking the conveying mechanism consists of components of the loading/unloading mechanism and the retaining fixture, or of the conveying mechanism and the retaining fixture, which can be made to interlock so that the loading/unloading mechanism in conjunction with the conveying mechanism can be prevented from dropping downwards in the event of a power failure.

In a further advantageous modification of the invention, the means of locking the conveying mechanism is provided with moving and fixed locking mechanism components, the fixed locking mechanism component being positioned on the outside of the retaining fixture.

In yet another advantageous modification of the invention, the moving locking mechanism components are components of a microprocessor-controlled motor-driven conveyor sprocket on the loading/unloading mechanism whose purpose is to move the data storage medium in or out of the retaining fixture. Alternatively, the moving locking mechanism components may include an interlocking catch and an actuating rod forming part of a microprocessor-controlled solenoid.

The remaining features and advantages of the invention are evident from the description of the examples of the invention illustrated in the diagrams as well as from the remaining Subclaims.

The diagrams show the following:
- Fig. 1: a partial three-dimensional view of the conveying mechanism as described by the present invention showing the locking mechanism components in their initial position and disengaged from a retaining fixture for data storage media,
- Fig. 2: a magnified view of the mechanism shown in Fig. 1 with the locking mechanism components highlighted and illustrated in their initial position,
- Fig. 3: the mechanism shown in Fig. 2 with the locking mechanism components highlighted and illustrated in their first operating position after the initial position in which the locking mechanism is activated,
- Fig. 4: the mechanism shown in Fig. 2 with the locking mechanism components highlighted and illustrated in their second operating position after the initial position in which the locking mechanism components are engaged,
- Fig. 5: the mechanism shown in Fig. 2 with the locking mechanism components highlighted and illustrated in their third operating position after the initial position in which the data storage medium has been moved out of the retaining fixture,
- Fig. 6: the mechanism shown in Fig. 2 with the locking mechanism components highlighted and illustrated in their fourth operating position after the initial position in which the data storage medium has been moved back into the retaining fixture and the locking mechanism components are disengaged.

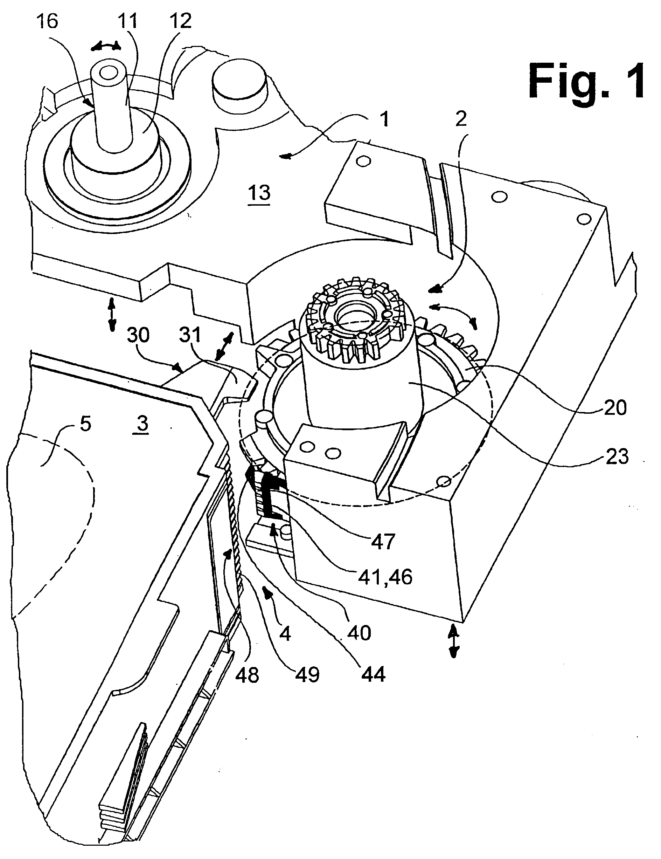

The following description of Figs. 1 to 6 relates to a preferred version of the present invention being a mechanism 1 for conveying in a vertical direction a loading and unloading mechanism for data storage media 5, a number of data storage media being held one above the other in a retaining fixture 3.

The mechanism is a component of a machine (not illustrated), ideally a recording/playback device of the familiar type such as an archiving unit or CD changer and the data storage medium is ideally a compact disc CD without a protective sleeve.

The retaining fixture 3 ideally takes the form, as shown in Fig. 1, of a magazine 3 with a number of disc slots arranged one above the other, or of a loading/unloading drawer and/or a recording/playback disc drive with a single disc slot, and the data storage media 5 are each held in the disc slots and drawers by means of a disc tray or disc holder 30, the loading/unloading drawer (not illustrated) and the recording/playback disc drive been positioned in a common front panel above and/or below the magazine 3.

It is self-evident to an expert in this technical field that the present invention could also be used in appliances for other types of data storage media such as compact discs CD with protective sleeve, magneto-optical discs MO, floppy disks FD or audio cassettes MC, and that the data storage media could be held in the retaining fixture(s) without a disc tray/disc holder, lying or standing on top of one another, or lying or standing alongside one another, and that a number of magazines, loading/unloading drawers and/or recording/playback disc drives could be arranged one above the other and/or alongside each other.

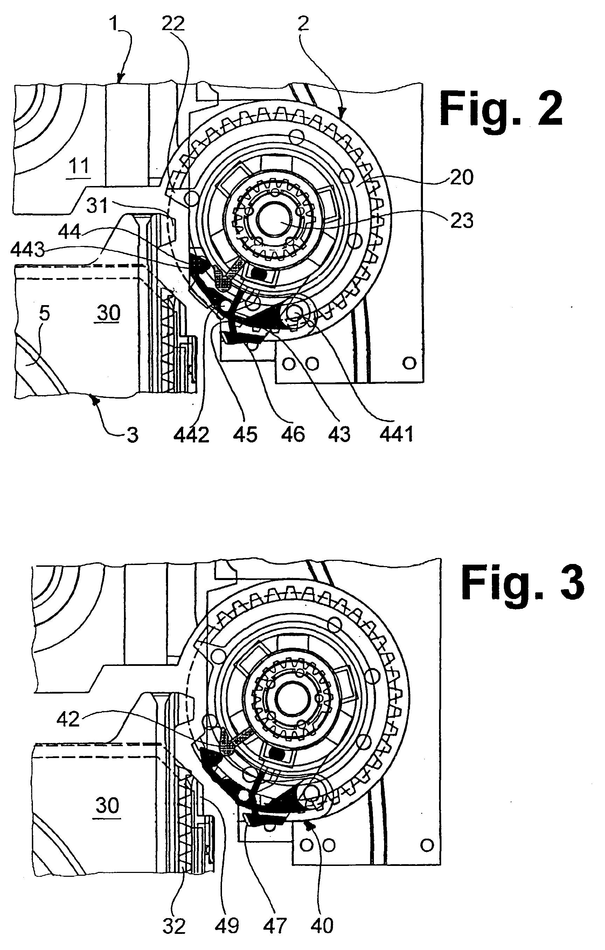

Figs. 1 and 2 show the conveying mechanism 1 which is the subject of the present invention and the loading and unloading mechanism 2 in the initial position in front of the top disc slot of a magazine 3, and the loading/unloading mechanism disengaged from a disc tray 30 holding a compact disc 5 and having a locating tab 31 on the side which protrudes from the top disc slot of the magazine towards the loading/unloading mechanism.

The conveying mechanism 1, which is only partially illustrated in Fig. 1, has a spindle drive 10 with a vertically arranged screw spindle 11 and a support 13 for the loading/unloading mechanism 2 held on the screw spindle by means of a spindle nut 12.

The drive unit (not illustrated) for the spindle drive 10, consisting in the familiar fashion of a toothed-belt system with a low gearing ratio and a microprocessor-controlled stepping motor, is, in conjunction with the spindle drive, ideally not self-locking in order to ensure that the apparatus remains compact and economical in construction.

The loading/unloading mechanism 2, which is only partially illustrated in Figs. 1 to 6 without the drive unit, has a drive shaft 23 positioned vertically in the holder 12, that shaft having attached to it a concentric conveyor sprocket 20 for moving the disc tray 30 holding the compact disc 5 in and out of the disc slots of the magazine 3 or the loading/unloading drawer or the recording/playback disc drive, said disc tray 30 being drawn out of the retaining fixture 3 only far enough to enable the compact disc 5 to be lifted out of the disc drive by means of a disc remover (not illustrated) forming part of the loading/unloading mechanism 2.

The conveyor sprocket 20, which takes the form of a gear wheel and can be rotated in a clockwise and anti-clockwise direction for the purpose of moving the disc tray 30 in and out, has a section of its circumference where there are no teeth which and is delimited at one end on the side facing the magazine 3 by an extractor cam 21 for moving the disc tray 30 outwards and at the other end by a return cam for moving the disc tray back inwards.

As is shown in Figs. 1 and 2, when the mechanism 1 is in the initial position, i.e. when the conveyor sprocket 20 is in its original position, the locating tab 31 of the disc tray 30 which is in the fully inserted position inside the magazine, is between the cams 21 and 22 in the toothless section of the conveyor sprocket 20, and the extractor cam 21 of the conveyor sprocket 20 is protruding into a toothless section of a toothed rack 32 along the side of the disc tray 30 without engaging with it.

On the preferred version of the invention, as illustrated Figs. 1 to 6, a means of locking the conveying mechanism 1 is provided which is engaged when the data storage medium 5, or compact disc has been moved out of the retaining mechanism 3 or the magazine to any degree.

The locking mechanism 4 is positioned on the conveying mechanism 1 or is a component of the loading/unloading mechanism 2 and can be made to engage with the magazine 3 in such a way that the loading and unloading mechanism 2 in conjunction with the conveying mechanism can been prevented from dropping downwards in the event of a fault in the form of a power failure.

The locking mechanism 4 has moving 40 and fixed 48 locking mechanism components, the fixed locking mechanism component 48 being positioned on the outer side of the retaining fixture 3 as shown in Figs 1 to 6, for example.

Some of the moving locking mechanism components 40 are components of the microprocessor-controlled motor-driven conveyor sprocket 20 of the loading/unloading mechanism 2.

As is shown in Figs. 1 to 6, the moving locking mechanism components 40 near the outer edge and on the top side of the conveyor sprocket 20 include an actuator cam 42, a ratchet pawl 44 held in its resting position by a first spring 43 within the range of movement of the actuator cam and an interlocking catch 46 which is spring-loaded by a second spring 45 and held in its initial position by means of the ratchet pawl, the interlocking catch 46 being disengaged from the fixed locking mechanism component 48 on the magazine 3.

The first spring 43 is, as shown in Figs 2 to 6, a component of the ratchet pawl 44 in the form of an elastic link with a pivot bolt 441 near the outer edge of the conveyor sprocket on the support 13, and the second spring 45 is a component of the interlocking catch 46 in the form of a link joined to a mounting point on the support 13 in a radial direction relative to the centre of the conveyor sprocket 20.

The ratchet pawl 44 has, firstly, near its centre a stop pin 442 which, when the ratchet pawl is in the resting position, holds the interlocking catch 46 in its initial position, in which the interlocking catch 46 is disengaged from the magazine 3, by acting in an anti-clockwise direction against the force of its spring 45 by means of its locking cam (not illustrated). Secondly, the ratchet pawl 44 has, at the opposite end to the stop pin 442, a release pin 443 which can be actuated by the actuating cam 42, which is rigidly attached to the conveyor sprocket 20 and rotates with it, when the conveyor sprocket is rotated in a clockwise direction.

The moving interlocking catch 46 and the fixed interlocking catch 48 both have multiple ridges and grooves 47 and 49 on their mating faces which interlock with one another when the locking mechanism components 40 are engaged, the said ridges and grooves ideally being V-section in design and running horizontally.

The method of operation of the apparatus is as follows:

Starting from the initial position of the mechanism as illustrated in Figs, 1 and 2 and the initial position of the conveyor sprocket 20, the conveyor sprocket 20 is first of all rotated in a clockwise direction by means of the microprocessor-controlled drive motor.

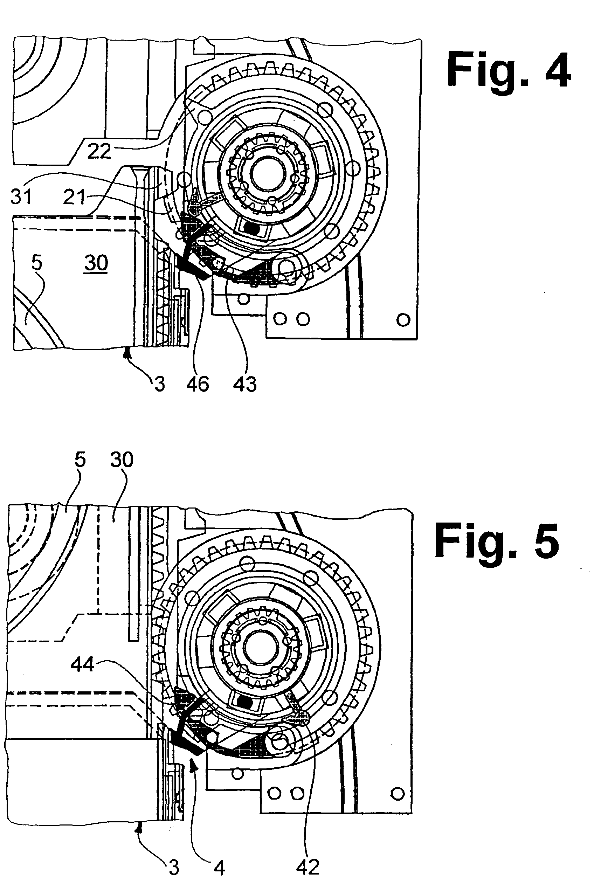

When the conveyor sprocket 20 reaches the first position after the initial position as illustrated in Fig. 3, the actuating cam 42 is brought into contact with the release cam 443 on the ratchet pawl 44 and the ratchet pawl forced outwards in a radial direction relative to the centre of the conveyor sprocket 20 against the force of its spring 43 and pivoting around the pivot pin 441.

As the conveyor sprocket 20 is turned further in the same direction it reaches the second position after the initial position as illustrated in Fig. 4 in which the extractor cam 21 on the conveyor sprocket 20 is just coming into contact with the locating tab 31 of the top disc tray 30 in the magazine 3 and is about to start moving the disc tray 30 out of the disc magazine, whilst the interlocking catch 46 is released by the stop pin 442 on the ratchet pawl 44. The interlocking catch 46 is then rotated through an arc in a clockwise direction by the action of its spring 45 and pressed against the fixed interlocking catch 48 on the magazine 3 thereby causing their respective ridges and grooves 47 and 49 to engage/interlock with one another thus securing the conveying mechanism 1 against dropping downwards in the event of a power failure.

Subsequently, the conveyor sprocket 20 continues to rotate to the third position as illustrated in Fig. 5 in which the disc tray 30 has been moved out of the magazine 3 by the toothed section of the conveyor sprocket 20 to a point at which the inner end of the disc tray is still inside the magazine and the compact disc 5 in the disc tray is free to be lifted out by the disc remover, while the locking mechanism remains engaged.

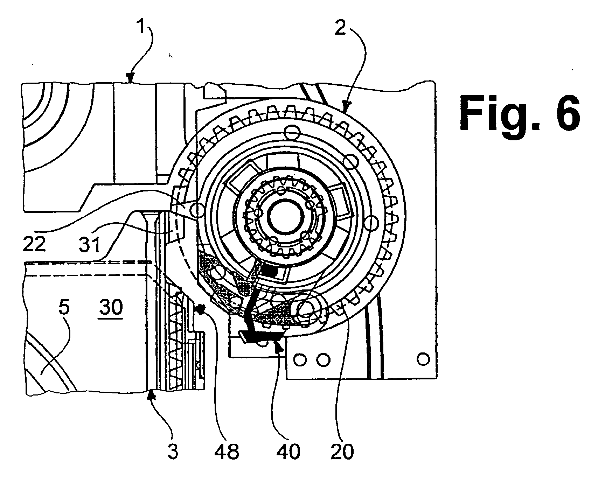

In order to move the disc tray 30 back into the magazine, the direction of rotation of the conveyor sprocket 20 is reversed and the sprocket rotated until the return cam 22 on the conveyor sprocket 20 is brought into contact with the locating tab 31 of the disc tray, as illustrated in Fig. 6, and completes the process of returning the disc tray to its original position. At the same time, the actuating cam 42 of the moving locking mechanism components 40 is pressed against the interlocking catch 46 by the movement of the conveyor sprocket 20 so that when the disc tray 30 has been moved all the way back into the magazine, the interlocking catch 46 is once again in its initial position and disengaged from the fixed interlocking catch 48 on the magazine 3. The interlocking catch 46 is thereby moved back against the force of its spring 45 into the position where it is held by the ratchet pawl 44.

Finally, when the disc tray 30 has been moved all the way back into the magazine, the conveyor sprocket 20 is moved back a small distance in a clockwise direction again until it is once again in the initial position as shown in Figs. 1 and 2 in which the locating tab 31 is not in contact with either the extractor cam or the return cam so that the conveying mechanism 1 together with the loading/unloading mechanism 2 is free to move in a vertical direction.

On an alternative version of the apparatus (not illustrated), the moving locking mechanism components 40 of the conveying mechanism 1 consist of an interlocking catch 41 forming part of an actuator pin designed as a component of a microprocessor-controlled solenoid, said interlocking catch being engaged with the fixed interlocking catch 48 on the retaining fixture/magazine 3 by means of a spring. In order to disengage the locking mechanism 4, the solenoid is energised by a control unit at the times indicated in the description above of the preferred version of the invention.
- 1: Conveying mechanism
- 2: Loading/unloading mechanism
- 3: Retaining mechanism (magazine, recording/playback disc drive or loading/unloading drawer)
- 4: Locking mechanism (for conveying mechanism)
- 5: Data storage medium (CD, NO, FD or MC)
- 10: Screw spindle drive (conveying mechanism)
- 11: Screw spindle
- 12: Spindle nut
- 13: Support
- 20: Conveyor sprocket (loading/unloading mechanism)
- 21: Extractor cam (conveyor sprocket)
- 22: Return cam (conveyor sprocket)
- 23: Drive shaft (conveyor sprocket)
- 30: Disc tray/disc holder (retaining fixture)
- 31: Locating tab (disc tray/disc holder)
- 32: Toothed rack
- 40: Moving locking mechanism components (conveying mechanism)
- 41: Interlocking catch (loading/unloading mechanism)
- 42: Actuating cam (moving locking mechanism components)
- 43: First Spring (ratchet pawl/moving locking mechanism components)
- 44: Locking pawl (moving locking mechanism components)
- 45: Second Spring (interlocking catch/moving locking mechanism components)
- 46: Interlocking catch (moving locking mechanism components)
- 47: Ridges/grooves (interlocking catch/moving locking mechanism components)
- 48: Fixed locking mechanism components
- 49: Ridges/grooves (locking mechanism components, retaining fixture)
- 441: Pivot pin (ratchet pawl)
- 442: Stop pin (ratchet pawl)
- 443: Release cam (ratchet pawl)

## Claims

1. Apparatus (1) for conveying in a vertical direction a loading and/or unloading mechanism (2) for data storage media (5), one or more data storage media being held in one or more retaining fixtures (3), **characterised in that** a mechanism (4) for locking the conveying mechanism (1) is provided that is engaged when a data storage medium (5) is moved out of the retaining fixture (3) to any degree.

2. Apparatus in accordance with Claim 1, characterised in that the locking mechanism (4) is positioned on the conveying mechanism (1) and can be made to engage with the retaining fixture (3) for the data storage media (5) in such a way that the loading and unloading mechanism (2) together with the conveying mechanism can be prevented from dropping downwards in the event of a power failure.

3. Apparatus in accordance with Claim 1, characterised in that the locking mechanism (4) is composed of components of the loading/unloading mechanism (2) and the retaining fixture (3) and the locking mechanism components can be made to engage with one another in such a way that the loading and unloading mechanism (2) together with the conveying mechanism can be prevented from dropping downwards in the event of a power failure.

4. Apparatus in accordance with Claim 2 or 3, characterised in that the locking mechanism (4) is composed of moving (40) and fixed (48) locking mechanism components, the fixed locking mechanism component being positioned on the outside of the retaining fixture (3).

5. Apparatus in accordance with Claims 2 and 4, characterised in that the moving locking mechanism components (40) include an interlocking catch (41) and an actuating pin forming a component of a microprocessor-controlled solenoid.

6. Apparatus in accordance with Claims 3 and 4, characterised in that the moving locking mechanism components (40) are components of a microprocessor-controlled, motor-driven conveying sprocket (20) on the loading/unloading mechanism (2) whose purpose is to move the data storage medium in/out of the retaining fixture (3).

7. Apparatus in accordance with Claim 6, characterised in that the moving locking mechanism components (40) include an actuating cam (42) in the vicinity of the outer edge of the conveyor sprocket (20), a ratchet pawl (44) held in its resting position within the range of movement of the actuating cam by a spring (43), and an interlocking catch (46) spring-loaded by a spring (45) and held in its initial position by means of the ratchet pawl.

8. Apparatus in accordance with Claim 7, characterised in that the interlocking catch (46) can be released and moved radially through an arc so as to interlock with the fixed interlocking catch (48) on the retaining fixture (3) when the data storage medium starts to be moved out of the magazine, and in that the interlocking catch (46) can be returned to its initial position by means of the actuating cam (42) when the data storage medium has been moved fully back into the magazine.

9. Apparatus in accordance with any of the Claims 4 to 8, characterised in that the moving interlocking catch (46) or (41) and the fixed interlocking catch (48) each have multiple ridges and grooves (47, 49) on their mating ends which interlock when the two components are engaged.

10. Apparatus in accordance with any of the claims 1 to 8, characterised in that the retaining fixture (3) takes the form of a magazine with multiple disc slots arranged one above the other, or of a loading/unloading drawer or a recording/playback disc drive each having a slot for a data storage medium (5), and in that the data storage media are held in the slots with or without a tray (30).

11. Apparatus in accordance with any of the Claims 1 to 10, characterised in that the data storage medium (5) takes the form of a compact disc (CD) with or without a protective sleeve, a magneto-optical disc (MO), a floppy disc (FD) or an audio cassette (MC).
